# EUROPEAN PATENT SPECIFICATION

(11) **EP 3 663 591 B1**
(45) Date of publication and mention of the grant of the patent: **06.10.2021**
(21) Application number: 18210855.5
(22) Date of filing: 06.12.2018
(51) Int. Cl.: F16B 1/00, B60P 1/64, F16B 45/02

(54) **HOOK FOR A HOOKLOADER**
HAKEN FÜR EINEN HAKENLADER
CROCHET POUR CHARGEUR À CROCHET

(43) Date of publication of application: 10.06.2020
(73) Proprietor: Hyva Holding BV, 2408 AK Alphen aan den Rijn (NL)
(72) Inventor: OOSTERVELD, Albertus Jacobus, 7701 TJ Dedemsvaart (NL); SHARMA, Rahul, 2613 GA Delft (NL); PORTILLA, Pablo Ramos, 2353 MG Leiderdorp (NL); AERTS, Wouter Frederik, 2012 DL Haarlem (NL)
(74) Representative: Haseltine Lake Kempner LLP

(56) References cited:
- DE-A1- 2 903 462
- US-A- 5 542 807

## Description

The present invention concerns a hook for a hookloader.

Hookloader vehicles are known which can pick-up and haul a container onto the back of the vehicle. A hookloader vehicle typically comprises a driver cab, a main chassis and a pivotable arm having a hook. One or more hydraulic cylinders are provided which can be actuated to pivot the arm with respect to the main chassis.

A key component of a hookloader is the hook itself, which attaches the object to be lifted to the hookloader arm for lifting. It can be very dangerous if a hook fails during use because of the significant load is borne by the hook. A failed hook could result in the object being lifted dropping unsafely, which could damage the hookloader, its surroundings, and risk the injury or death of any nearby persons. Furthermore, the large forces exerted could result in a catastrophic failure in a weak hook, which could eject dangerous debris. A hook for a hookloader is known from DE 29 03 462 A1.

Accordingly, it should be understood that improvements are desirable in the field of hookloader hooks in order to minimise the risk of a hook failure.

According to a first aspect, there is provided a hook for a hookloader comprising: a shank portion for connecting the hook to a hookloader; a hook portion comprising a throat; and a wear indicator formed on the hook portion configured to indicate wear on the hook portion.

The wear indicator may be formed around at least a portion of an inner circumference or perimeter of the throat.

The wear indicator may be formed around substantially the entire inner circumference or perimeter of the throat.

The throat may comprise an inner throat surface formed on the inner circumference or perimeter of the throat. The inner throat surface may be convex or substantially flat across a width thereof. The wear indicator may be formed immediately adjacent the inner throat surface or may be spaced apart therefrom. One or more wear indicators may be provided. The wear indicator may follow a curve or bend of the throat or the hook portion.

The hook may further comprise a supplementary wear indicator, or a plurality of wear indicators.

The supplementary wear indicator may be arranged around the wear indicator. The supplementary wear indicator may be arranged immediately adjacent the wear indicator, or may be laterally spaced apart therefrom. The supplementary wear indicator may follow a substantially similar curve or bend to the wear indicator. The supplementary wear indicator may include one, some, or all of the features described herein with respect to the wear indicator, except where mutually exclusive. The wear indicator and supplementary wear indicator may be formed contiguously with the hook portion or as separate components attached or affixed thereto. The wear indicator and supplementary wear indicator may be formed from materials having different properties so as to provide different wear characteristics.

The wear indicator may comprise a wear indicator element which is raised with respect to an outer surface of the hook portion.

The wear indicator element may be formed contiguously with the hook portion, or may be a separate element which is attached or affixed to the hook portion. The wear indicator element may overlay the outer surface of the hook portion. The wear indicator element may be formed from a material having one or more distinguishing characteristics from a material of the hook portion. The wear indicator element may have a substantially constant depth or height from the outer surface of the hook portion.

The wear indicator may comprise a substantially continuous wear indicator surface which is offset from the outer surface of the hook portion so as to form the wear indicator element.

The wear indicator element may be elongate, having a first dimension (or length), which may extend along a curve of the hook portion, and a second dimension (or width) substantially perpendicular to the first dimension. The wear indicator may be substantially flat, convex, or concave along the second dimension. The wear indicator element may have a substantially constant second dimension along substantially its entire first dimension (i.e. the wear indicator may have a substantially constant width).

The wear indicator surface may be substantially planar.

The wear indicator element may be substantially square or rectangular in cross-section.

The wear indicator surface may offset from the outer surface of the hook portion by a predetermined distance such that the wear indicator surface has a contour profile substantially identical to a contour profile of the outer surface of the hook portion.

The wear indicator surface may be inclined with respect to the outer surface of the hook portion such that the wear indicator element has a decreasing depth along the incline.

The wear indicator may be trapezoidal or triangular in cross-section.

The wear indicator surface may be inclined across a width of the wear indicator surface such that the depth of the wear indicator element varies across a width of the wear indicator element.

The surface may be inclined away from the throat such that the element has a greatest depth closest to the throat, or may be inclined towards the throat such that the element has a greatest depth furthest from the throat.

The wear indicator may be a wear indicator recess which is substantially recessed with respect to an outer surface of the hook portion.

The wear indicator recess may be elongate, having a first dimension (or length), which may extend along a curve of the hook portion, and a second dimension (or width) substantially perpendicular to the first dimension. The wear indicator may be substantially flat, convex, or concave along the second dimension. The wear indicator element may have a substantially constant second dimension along substantially its entire first dimension (i.e. the wear indicator may have a substantially constant width). The wear indicator recess may be groove formed in the outer surface of the hook portion.

The throat may comprise an apex having a smaller radius of curvature with respect to the rest of the throat, and wherein the wear indicator is formed proximate the apex of the throat.

The apex may be formed opposite the shank portion. The throat may comprise first and second apexes, and the wear indicator may be formed proximate one or both of these apexes. A respective wear indicator may be formed around each of the apexes.

The shank portion may be configured for releasably connecting the hook to a hookloader.

The hook may further comprise a throat opening for providing access to the throat, and a closure latch for selectively closing the throat opening.

According to a second aspect, there is provided a hookloader comprising a hook in accordance with the first aspect and any features described therewith.

The above aspects may comprise any combination of the features and/or limitations referred to herein, except combinations of such features as are mutually exclusive.

Embodiments of the invention will now be described, by way of example, with reference to the accompanying drawings, in which:
Figure 1 schematically shows a hookloader comprising a hook;
Figure 2 schematically shows a perspective view of a hook for a hookloader;
Figure 3 schematically shows the hook of Figure 2 in side view;
Figure 4 schematically shows the hook of Figure 2 in end view;
Figures 4A and 4B show detailed views of portions of the hook as shown Figure 4
Figures 5A-5E schematically show side views of various exemplary hooks; and
Figures 6-11 schematically show various exemplary hooks, the "A" figure showing a side view of the hook and the "B" figure showing a cross-sectional view of the hook on the line B-B shown in the "A" figure.

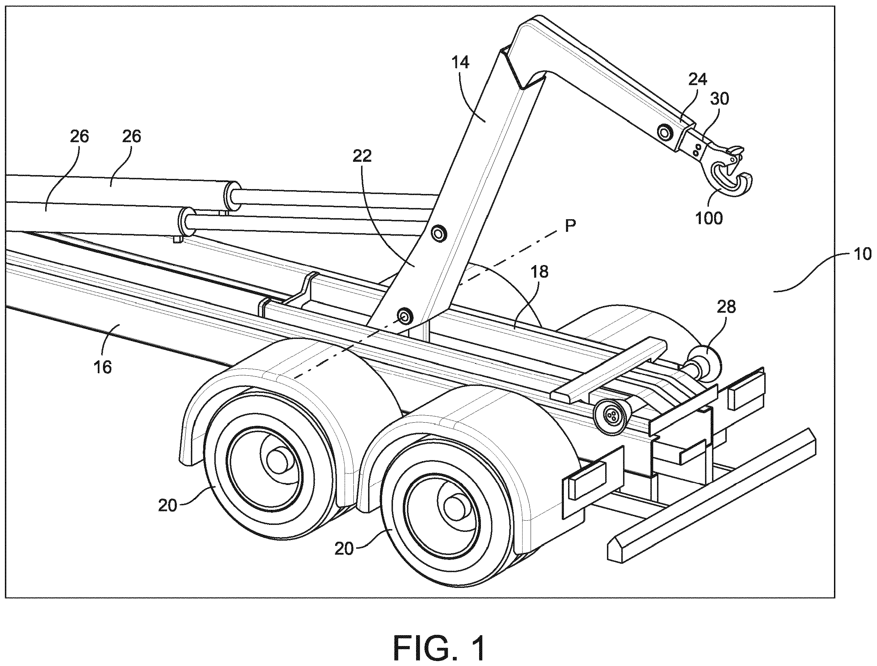

**Figure 1** shows a hook loader vehicle 10 which is used to pick up and haul a container (not shown) onto the vehicle 10. The vehicle 10 comprises a main chassis 16 which defines a substantially flat bed 18 onto which the container 12 can be hauled. The vehicle 10 also comprises wheels 20 and a cab including the engine (not shown). The vehicle 10 has a longitudinal axis Lv (front to rear) along which the vehicle is drivable. The vehicle 10 comprises an L-shaped arm 14 which is attached to the chassis 16. A proximal end 22 of the L-shaped arm 14 is pivotably attached to the chassis 16 about a pivot axis P. A distal end 24 of the L-shaped arm 14 is provided with a hook 100. The arm 14 is constrained to pivot in a vertical plane that includes the longitudinal centre line of the vehicle 10. This means that arm 14 and hook 100 are laterally constrained (i.e. prevented from moving sideways) so that they can only move in directions parallel to the vertical plane which includes the longitudinal central axis of the vehicle 10. In this example, two parallel hydraulic cylinders 26 are coupled between the arm 14 and the chassis 16 and can be actuated to pivot the arm 14. The rear of the chassis 16 is also provided with one or more roller elements 28 which permit a container to easily be hauled onto the flat bed 18 by the arm 14.

In order to pick up a container, the vehicle 10 is driven into a position in which the longitudinal axis of the vehicle 10 and the longitudinal axis of the container are substantially parallel to one another. The vehicle 10 is also positioned such that the arm 14 and hook 100 are laterally aligned with a pick-up bar provided on the front of the container. The hydraulic cylinders 26 are then extended to pivot the arm 14 away from the chassis 16 to the position shown in Figure 1, in which the hook 100 is vertically aligned with the pick-up height of a pick-up bar of the container. The vehicle 10 is then driven backwards until the hook 100 is close enough to the pick-up bar to be attached. Once the hook 100 is attached to the pick-up bar of the container, the hydraulic cylinders 26 are then retracted in order to pivot the arm 14 back towards the flat bed 18 (clockwise about axis P in Figure 1) and lift the container onto the flat bed 18.

In order to remove a container from the hook loader vehicle 10, the above steps are essentially reversed.

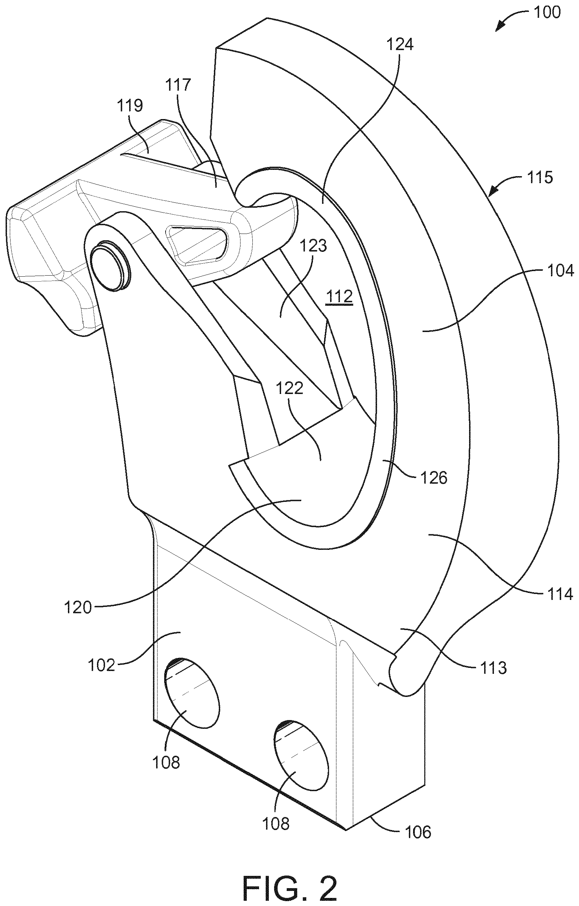

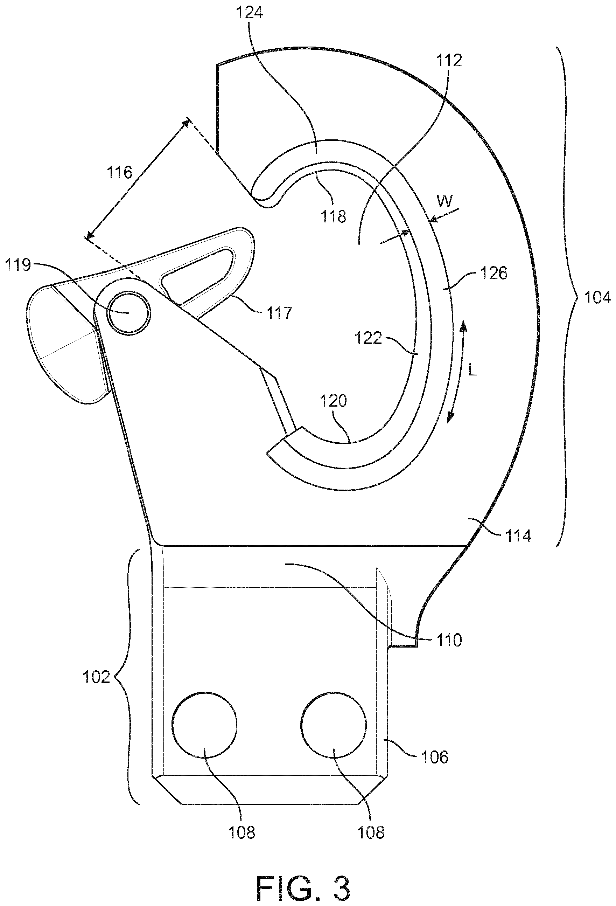

**Figures 2** **and** **3** show the hook 100 for the hookloader 10 in detail.

The hook 100 comprises a shank portion 102 and a hook portion 104.

The shank portion 102 in this example has a generally cuboidal shape. At a first end 106, the shank portion 102 is configured to be attached to the arm of a hookloader, such as the arm 14 of the hookloader 10. The second end 110 of the shank portion 102 is fixed to the hook portion 104. In this example, the shank and hook portions 102,104 are integrally formed as one cast item but, in other examples, they may be formed (e.g. milled) integrally from a solid blank or plate, or formed separately and connected together during the hook's manufacture.

In this example, the hook 100 is configured to be removably attached to the arm of a hookloader. This is achieved using two peg-receiving holes 108 which are formed through the shank portion 102 at the first end 106. In order to attach the hook 100 to an arm of a hookloader, the first end 106 of the shank portion 102 is inserted into a receiving housing 30 (see Figure 1) on the distal end of a hookloader arm. The receiving housing 30 has holes corresponding to the holes 108 on the shank portion 102. Once the holes of the housing 30 are aligned with the holes 108 on the shank portion 102, locking pegs are inserted into t the holes in order to attach the hook to the arm. If the hook requires removal, for example for maintenance or replacement, then the locking pegs can be removed and the shank portion 102 removed from the housing 30. It should be understood that hooks disclosed herein can be removably attached to a hookloader arm with other configurations. Furthermore, it should also be understood that the hooks disclosed herein can be configured to be attached to a hookloader arm in a permanent or non-removable manner, for example via welding or being integrally manufactured (e.g. by casting) with the hookloader arm or a portion thereof.

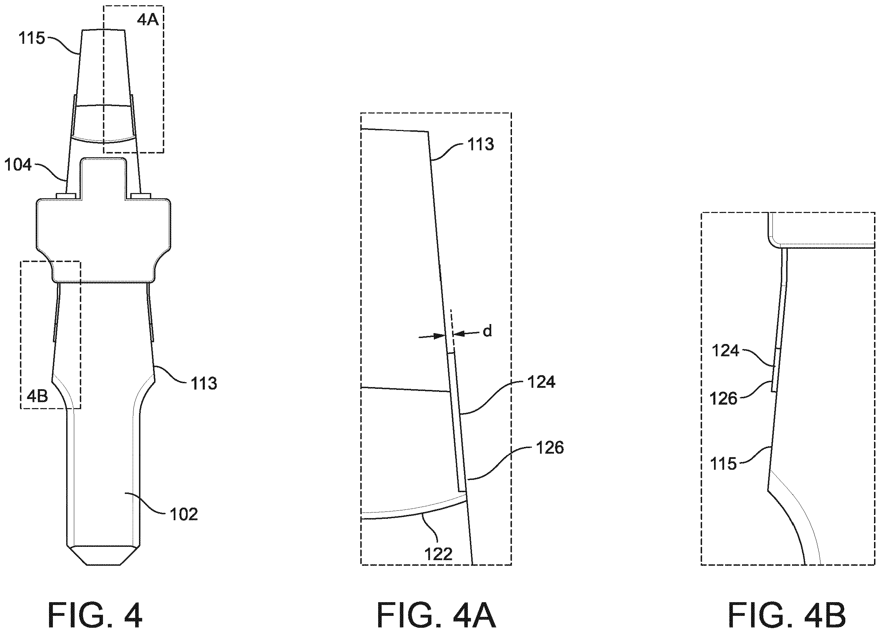

The hook 100 also comprises a hook portion 104, which comprises a throat 112. The throat 112 is an open area which is generally encircled by an arcuately-shaped hook body 114. The hook portion 104 has first and second outer surfaces 113, 115 which face in opposing directions and are generally planar (see also Figure 4).

The throat 112 is for receiving a portion of an item to be lifted, such as a pick-up bar of a container. In order to provide access to the throat 112, the hook portion comprises a throat opening 116, which is a gap in the hook body 114 through which an item can pass into the throat 112. A closure latch 117 is provided to inhibit accidental removal of items in the throat 112. The closure latch 117 is pivotable about a pivot 119 from a closed position (as shown in Figure 2) in which it blocks the throat opening 116 to inhibit removal of items from the throat 112 and an open position (not shown, but in the clockwise direction in Figure 2) in which it received in a recess 123 in the hook body 114 (see Fig. 2) so that it does not block the throat opening 116 to permit exit of items from the throat 112. The closure latch 117 comprises a combined stopper and counterweight 121 which engages with the hook body 114 in the closed position to prevent the latch from pivoting anti-clockwise out of the throat opening, and also exerts a biasing force to return the latch 117 to the closed position under the natural influence of gravity.

Referring to Figure 3 in particular, the throat 112 is generally elliptical in side view, having apexes 118,120 formed at opposing ends. A first apex 118 is formed opposite the shank portion 102 and a second apex 120 is formed proximate the shank portion 102. The apexes 118,120 are formed by parts of the hook body 114 have a smaller radius of curvature with respect to the rest of the hook body 114 which encircles the throat.

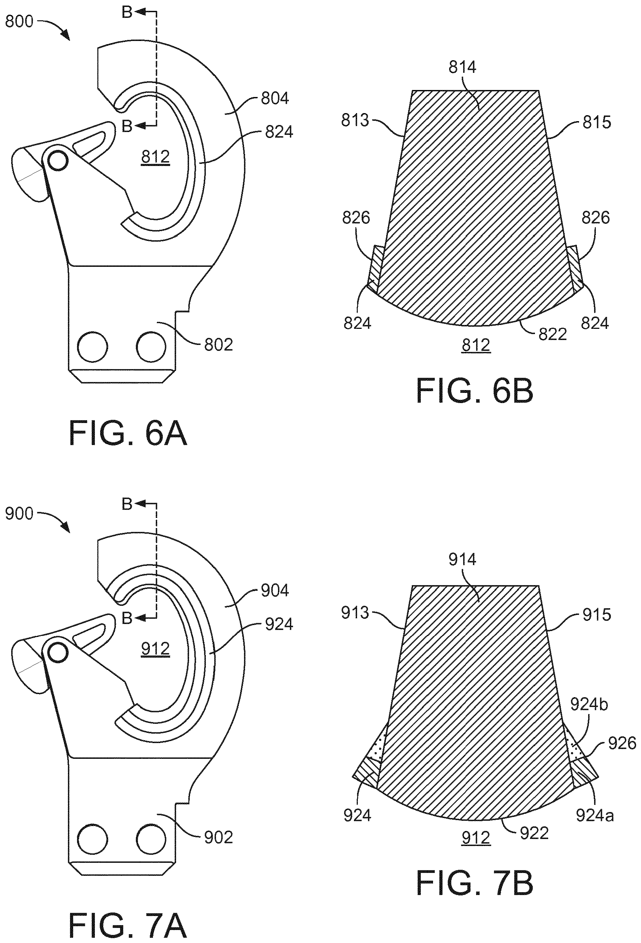

The hook portion 104 comprises an inner throat surface 122 which is a surface of the hook body 114 facing inwards towards the throat 112. The inner throat surface 122 is generally formed about the inner circumference of the throat 112 and is convex across its width (see Figure 6B) although in other examples, it may be flat across a width thereof. An item to be lifted by the hook 100 will typically predominantly engage the inner throat surface 122.

According to this disclosure, the hook portion 104 further comprises a wear indicator 124 which is configured to indicate wear on the hook portion. In fact, in this example two wear indicators 124 are provided, one on each of the opposing outer surfaces 113,115 of the hook portion 104.

The wear indicators 124 are formed around at least a portion of the inner circumference or perimeter of the throat 112 and, in this example, encircle the entire circumference of the throat 112.

Each wear indicator 124 is formed in this example immediately adjacent the lateral edge of the inner throat surface 122, but it could alternatively be spaced apart from the surface 122. Here, a single wear indicator 124 is provided on each opposing side of the throat 112 but in other examples, which will be described below, more than one wear indicator may be provided. As will be appreciated from Figures 2 and 3, the wear indicator 124 generally follows the arcuate shape of the throat 112 and the hook body 114.

Referring now to **Figures 4, 4A, and 4B****,** in this example the wear indicators 124 take the form of a wear indicator elements 124 which are each raised with respect to the outer surfaces 113,115 of the hook portion 104.

**Figure 4** shows the hook 100 in end view, along the planes of the outer surfaces 113, 115. Here, it will be appreciated that the outer surfaces 113,115 are non-parallel and taper apart towards the shank portion 102. Of course, the outer surfaces could be parallel, taper in another direction, or be non-planar within the principles of this disclosure.

Referring to **Figure 4A****,** which shows a detailed view of the indicated portion of Figure 4, the wear indicator element 124 is shown in closer detail. Here, it will be appreciated that the wear indicator element 124 is a raised portion with respect to the outer surface 113 of the hook portion 104. The wear indicator element 124 has a substantially constant depth (or height) d from the outer surface 113. As such, the wear indicator element 124 is substantially rectangular in cross-section and forms a substantially continuous wear indicator surface 126 which is offset from the outer surface 113 by the depth d. As the outer surface 113 is substantially planar in this example, the wear indicator surface 126 is also substantially planar. However, it should be understood generally that the wear indicator surface may be offset from the outer surface of the hook portion by a predetermined distance such that the wear indicator surface has a contour profile substantially identical to a contour profile of the outer surface of the hook portion. Accordingly, if the outer surface 113 were non-planar, then the wear indicator surface could be a raised surface which followed the contours of that non-planar surface.

**Figure 4B** shows another detailed view of the hook 100 on the opposing side having outer surface 115. As can be appreciated, the wear indicator element 124 on this side is formed in the same way as the other wear indicator element 124 (i.e. as a raised element having a wear indicator surface 126 which conforms to the outer surface 115).

In the example of Figures 2-4, the wear indicator elements 124 are formed contiguously with the hook portion 104. In particular, they are integrally cast with the hook 100.

However, in other examples, the wear indicator elements could be separate elements which are attached or affixed to the hook portion. As they are integrally cast with the hook 100, the wear indicator elements 124 are formed from the same material as the hook portion 104. However, in other examples, the wear indicator element could be formed from a material having one or more distinguishing characteristics from a material of the hook portion.

Referring back to Figure 3, it will be appreciated that the wear indicators elements 124 are generally elongate, having a length, L, which extends along the curve of the hook portion 104, and a width, W, which is substantially perpendicular to the length L. The wear indicators, as described above, have a substantially planar surface 126 meaning they are substantially flat across their width. It will also be appreciated that the wear indicator elements 124 have a substantially constant width along substantially its entire length. Of course, in other examples, the width of the wear indicator may vary along its length.

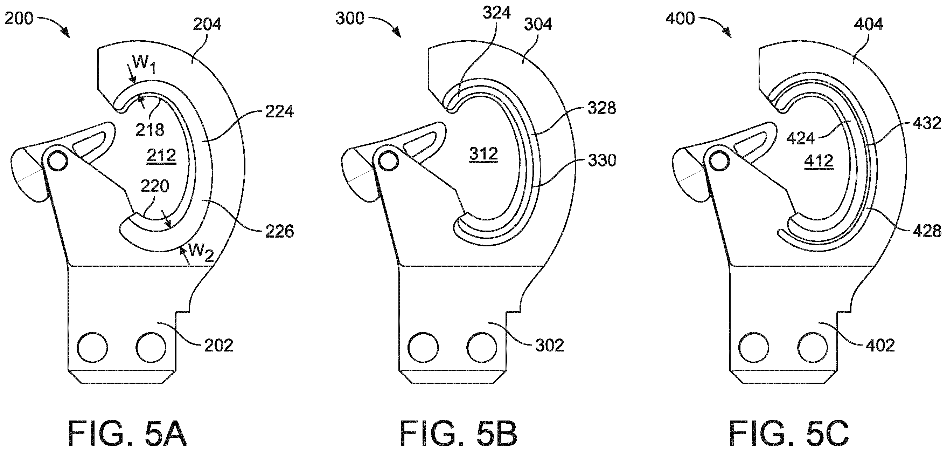

Referring to **Figure 5A****,** a further example of a hook 200 is shown in side view. Some of the common features between the hook 100 and the hook 200 are denoted by reference signs differing by 100. The hook 200 has a shank portion 202 and a hook portion 204 which comprises a throat 212. The hook 200 also comprises a wear indicator 224 which, like the wear indicators 124 of the hook 100, encircles the throat 212 and forms a raised wear indicator surface 226. However, unlike the wear indicator 124, the wear indicator 224 has a varying width. In this particular example, the wear indicator 224 has a minimum width W₁ proximate the throat apex 218 and a maximum width W₂ proximate the throat apex 220, and gradually increases in width therebetween around the throat 212. In other examples, the width of the wear indicator may vary along its length in different ways. Tailoring the width of the wear indicator to different areas around the throat, which may experience different levels of wear or have different tolerances to wear, may provide improved wear indication.

Referring now to **Figure 5B****,** another example hook 300 is shown in side view. Some of the common features between the hook 100 and the hook 300 are denoted by reference signs differing by 200. In this example, the hook portion 304 comprises a primary or inner wear indicator 324 which encircles the throat 312 and a supplementary or outer wear indicator 328 which arranged around and therefore encircles the primary wear indicator 324. It will be appreciated that the supplementary wear indicator 328 follows a substantially similar curve or bend to the primary wear indicator 324. The primary and supplementary wear indicators 324,328 are arranged immediately adjacent one another and share a common lateral edge 330. The primary wear indicator 324 and the supplementary wear indicator 328 may be formed from materials having different properties so as to provide different wear characteristics. The supplementary wear indicator 328 may include one, some, or all of the features described herein with respect to wear indicators, except where mutually exclusive. It should be understood that more than one supplementary wear indicator may be provided.

In **Figure 5C****,** a yet further example hook 400 is shown. In side view. Some of the common features between the hook 100 and the hook 400 are denoted by reference signs differing by 300. In this hook 400, like the hook 300 of Figure 5B, the hook 400 comprises both a primary wear indicator 424 and a supplementary wear indicator 428. However, unlike hook 300, on hook 400, the wear indicators 424,428 are laterally spaced apart from one another to provide a spacing gap 432 therebetween. This arrangement may provide improved wear indication in some scenarios.

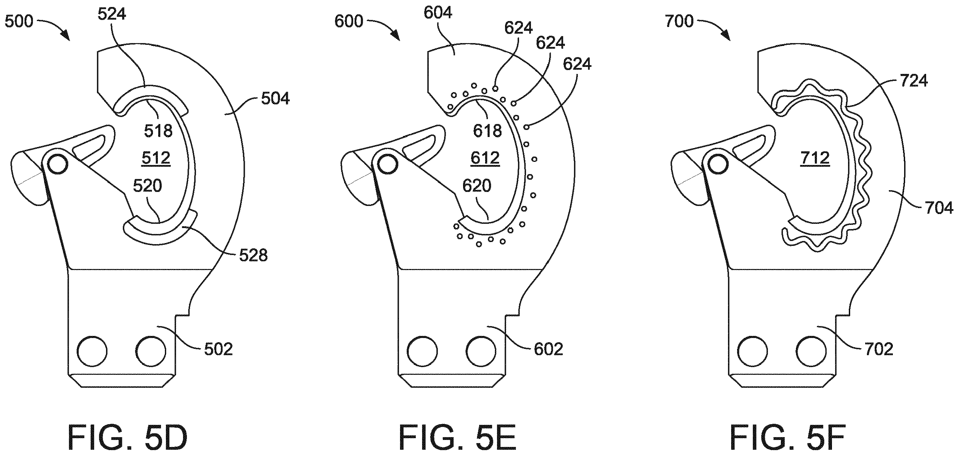

A further hook 500 is shown in side view in **Figure 5D****.** Common features between the hook 100 and the hook 500 are denoted by reference signs differing by 400. The hook 500 comprises a first wear indicator 524 which extends around the throat 512 proximate the throat apex 518, and a second, separate wear indicator 528 which extends around the throat 512 proximate the throat apex 520. Providing respective wear indicators at the apexes of the throat may provide targeted wear indication in areas which are more prone or susceptible to excessive wear. It should be understood that, more generally, a hook in accordance with this disclosure may comprise more than one wear indicator, each wear indicator arranged in a particular location where wear indication is required.

**Figure 5E** shows a yet further hook 600 in side view. Common features between the hook 100 and the hook 600 are denoted by reference signs differing by 500. In this example hook 600, a plurality of discrete wear indicators 624 are provided in an array about the throat 612 of the hook 600. As will be appreciated from Figure 5E, the spacing between the wear indicators may be varied about the throat 612 (or more generally about the hook portion 624). The wear indicators 624 in this example are configured with tighter spacing proximate the throat apexes 618,620 than about the remainder of the throat 612. More generally, providing more closely spaced wear indicators in areas more prone to excessive wear may provide improved wear indication of the hook as a whole. Although the wear indicators 624 in this example are circular or dot-like, other shapes can be envisaged, such as square or triangular indicators.

In a further example hook 700 shown in **Figure 5F****,** the wear indicator 724 does not follow the smooth arcuate shape of the throat 712 and instead has a serpentine shape which encircles the throat 712.

It should be understood from the range of different example hooks 100, 200, 300, 400, 500, 600, 700, that wear indicators in accordance with this disclosure may take a wide range of shapes, arrangements, and configurations. It should be understood that wear indicators in accordance with this disclosure may include none, one, some, or all of the features of the exemplary wear indicators illustrated, except where mutually exclusive.

The examples of Figures 3 and 5A-F show different exemplary shapes of wear indicators in plan view. Wear indicators may also have differing cross-sectional shapes, which will now be described in more detail with reference to Figures 6-11. In these Figures, the size of the wear indicators may have been exaggerated in order to provide easier comprehension of the concepts discussed.

**Figures 6A and 6B** show an exemplary hook 800. Figure 6A shows the hook in side view, and Figure 6B shows a cross-sectional view through the hook portion 804 on the plane BB in the direction of the arrows.

The wear indicator 824 of hook 800 is substantially identical to that of wear indicators 124 described in relation to Figures 2 and 3 above. Here it can be clearly seen that a wear indicator 824 is formed immediately adjacent either side of the inner throat surface 822 on the respective outer surface 813,815. The wear indicators 824 have a substantially rectangular cross-section when viewed along their length. In this example, the wear indicators 824 are formed from a material which has one or more different properties to the main hook portion body 814, but it should be understood that in other examples they may be formed from the same material.

**Figures 7A and 7B** show an exemplary hook 900. Figure 7A shows the hook in side view, and Figure 7B shows a cross-sectional view through the hook portion 904 on the plane BB in the direction of the arrows.

The hook 900 comprises wear indicators 924 on the outer surfaces 913,915 thereof. In this example, the wear indicator surface 926 defined by the wear indicator 924 is inclined with respect to its respective outer surface of the hook portion 904 such that the wear indicator element 924 has a decreasing depth along the incline. In this example, the wear indicator element 924 have a maximum depth proximate the inner throat surface 922, and the minimum depth away from the surface 922. The wear indicator elements 924 have a triangular cross-section in this example, with the depth of the wear indicator element 924 relative to the outer surfaces 913,915 approaching zero away from the throat surface 922. However, the minimum depth of the wear indicator elements 924 could be non-zero, such that the wear indicators 924 have a trapezoidal cross section with an inclined wear indicator surface.

In the example hook 900, the wear indicator surface 926 is inclined away from the throat 912 such that the wear indicator element 924 has a greatest depth closest to the throat 912. However, in other examples, the wear indicator surface may be inclined towards the throat such that the element has a greatest depth furthest from the throat. The wear indicator surfaces 926 in this example are inclined across a width of the wear indicator surface such that the depth of the wear indicator element varies across a width of the wear indicator element, but it should be understood that the wear indicator surface could alternatively or additionally be inclined in other directions.

The hook 900 also exemplifies another feature in that the wear indicator element 924 comprises first and second portions 924a, 924b which are formed from materials having different properties. Although this feature does not necessarily need to be implemented in combination with the inclined wear indicator surface 926 and could be utilised with a flat surface, it may provide additional advantages in that, if the materials of portions 924a,b are identifiably different, for example visually different, then a degree of wear may be indicated more clearly. For example, once the outer portion 924b begins to exhibit wear, then this may indicate that the hook is more worn than when just inner portion 924a is worn. Of course, more than two portions having different materials could be provided to give a yet further more precise indication of the degree of wear.

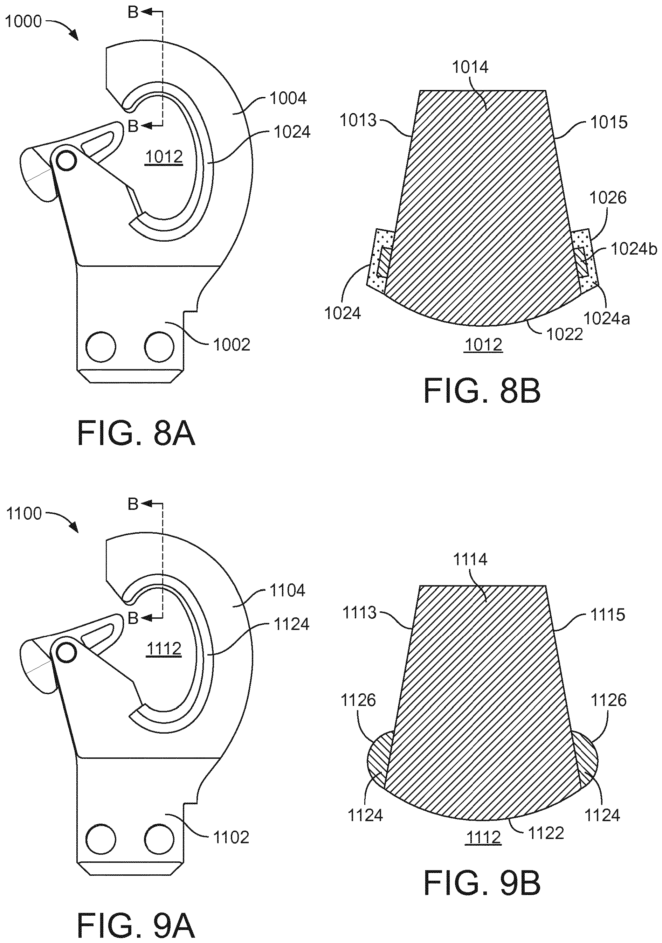

**Figures 8A and 8B** show an exemplary hook 1000. Figure 8A shows the hook in side view, and Figure 8B shows a cross-sectional view through the hook portion 1004 on the plane BB in the direction of the arrows. The hook 1000 has wear indicator elements 1024 has flat wear indicator surfaces 1026 and two portions 1024a and 1024b formed from different materials. As will be appreciated in this example, the different portions 1024a,b are stacked in the depth direction of the wear indicator element 1024, meaning that the inner portion 1024b is entirely encapsulated by the outer portion 1024a. If the materials of portions 924a,b are identifiably different, for example visually different, then a degree of wear may be indicated more clearly by this arrangement. For example, once the outer portion 924b if any of the inner portion 1024b is visible, then this may indicate that the hook has experienced a pre-determined amount of wear, for example, reaching an acceptable wear limit. As with hook 900, the wear indicators 1024 of hook 100 could have more than two portions having different materials to give a yet further more precise indication of the degree of wear.

**Figures 9A and 9B** show an exemplary hook 1100. Figure 9A shows the hook in side view, and Figure 9B shows a cross-sectional view through the hook portion 1104 on the plane BB in the direction of the arrows. In this example, the wear indicator surfaces 1126 of the wear indicator elements 1124 are convex.

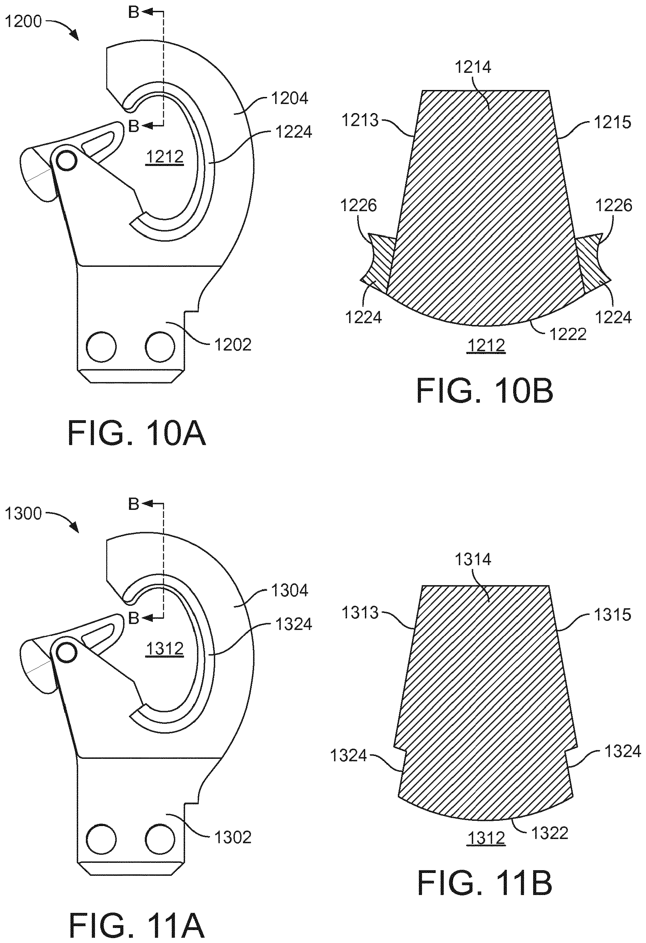

**Figures 10A and 10B** show an exemplary hook 1200. Figure 10A shows the hook in side view, and Figure 10B shows a cross-sectional view through the hook portion 1204 on the plane BB in the direction of the arrows. In this example, the wear indicator surfaces 1226 of the wear indicator elements 1224 are concave.

Providing convex or concave wear indicator surfaces according to the examples of Figures 9 and 10 may provide more detailed insight into how even or uneven wear is occurring on a hook.

**Figures 11A and 11B** show an exemplary hook 1300. Figure 11A shows the hook in side view, and Figure 11B shows a cross-sectional view through the hook portion 1304 on the plane BB in the direction of the arrows. Unlike the other examples described above, in hook 1300, the wear indicator 1324 is a wear indicator recess 1324 which is substantially recessed with respect to the respective outer surface 1313,1315 of the hook portion 1304.

Although the recesses 1324 in this example are directly adjacent to the inner throat surface 1322, in other examples, a wear indicator recess may be formed as a groove in the outer surface of the hook portion spaced apart from the inner throat surface.

A wear indicator recess, rather than a protruding element as per the other examples described herein, may indicate wear as the depth of the recess may decrease as increasing wear occurs.

It should be understood that, except where mutually exclusive, wear indicators may be provided having a selection of multiple features disclosed in the different examples described above, e.g. in a 'mix-and-match' manner.

In common to the hooks disclosed herein is a wear indicator formed on the hook portion configured to indicate wear on the hook portion. The various wear indicators disclosed may generally provide an additional dedicated sacrificial element which may be worn during the hook's use and which can thereby indicate an amount of wear which has occurred to the hook. Some wear indicators disclosed could be configured to receive wear and indicate wear on the hook without significantly altering the structural properties or loading capacity of the hook itself. Accordingly, it will be appreciated that the wear indicators disclosed herein may aid users of hookloaders in more accurately assessing the wear which occurs on hooks, thereby indicating more clearly when a hook may need to be replaced or repaired. This may improve the safety or reliability of hookloaders, for example.

## Claims

1. A hook (100) for a hookloader (10) comprising:
a shank portion (102) for connecting the hook (100) to a hookloader (10);
a hook portion (104) comprising a throat (112); **characterized by** a wear indicator (124) formed on the hook portion (104) configured to indicate wear on the hook portion (104).

2. A hook for a hookloader as claimed in claim 1, wherein the wear indicator (124) is formed around at least a portion of an inner circumference or perimeter of the throat (112).

3. A hook for a hookloader as claimed in claim 2, wherein the wear indicator (124) is formed around substantially the entire inner circumference or perimeter of the throat (112).

4. A hook for a hookloader as claimed in any preceding claim, further comprising a supplementary wear indicator (124).

5. A hook for a hookloader as claimed in any preceding claim, wherein the wear indicator (124) comprises a wear indicator element (124) which is raised with respect to an outer surface of the hook portion (104).

6. A hook for a hookloader as claimed in claim 5, wherein the wear indicator (124) comprises a substantially continuous wear indicator surface (126) which is offset from the outer surface of the hook portion (104) so as to form the wear indicator element (124).

7. A hook for a hookloader as claimed in claim 6, wherein the wear indicator surface (126) is substantially planar.

8. A hook for a hookloader as claimed in claim 6, wherein the wear indicator surface (126) is offset from the outer surface of the hook portion (104) by a predetermined distance such that the wear indicator surface (126) has a contour profile substantially identical to a contour profile of the outer surface of the hook portion (104).

9. A hook for a hookloader as claimed in claim 6 or 7, wherein the wear indicator surface (926) is inclined with respect to the outer surface of the hook portion (904) such that the wear indicator element (924) has a decreasing depth along the incline.

10. A hook for a hookloader as claimed in claim 9, wherein the wear indicator surface (926) is inclined across a width of the wear indicator surface (926) such that the depth of the wear indicator element (924) varies across a width of the wear indicator element (924).

11. A hook for a hookloader as claimed in any of claims 1-4, wherein the wear indicator (1324) is a wear indicator recess (1324) which is substantially recessed with respect to an outer surface of the hook portion (1304).

12. A hook for a hookloader as claimed in any preceding claim, wherein the throat comprises an apex (118,120) having a smaller radius of curvature with respect to the rest of the throat, and wherein the wear indicator is formed proximate the apex (118,120) of the throat.

13. A hook for a hook loader as claimed in any preceding claim, wherein the shank portion is configured for releasably connecting the hook to a hookloader.

14. A hook for a hookloader as claimed in any preceding claim, further comprising a throat opening (116) for providing access to the throat, and a closure latch (117) for selectively closing the throat opening.

15. A hookloader comprising a hook in accordance with any of the preceding claims.

## Patentansprüche

1. Haken (100) für einen Abrollkipper (10), umfassend:
einen Schaftabschnitt (102), um den Haken (100) mit einem Abrollkipper (10) zu verbinden,
einen Hakenabschnitt (104), der ein Maul (112) umfasst,
**gekennzeichnet durch** eine Abnutzungsanzeige (124), die an dem Hakenabschnitt (104) ausgebildet und dazu ausgestaltet ist, Abnutzung an dem Hakenabschnitt (104) anzuzeigen.

2. Haken für einen Abrollkipper nach Anspruch 1, wobei die Abnutzungsanzeige (124) um mindestens einen Abschnitt eines inneren Umfangs oder einer inneren Begrenzung des Mauls (112) herum ausgebildet ist.

3. Haken für einen Abrollkipper nach Anspruch 2, wobei die Abnutzungsanzeige (124) um im Wesentlichen den gesamten inneren Umfang oder die gesamte innere Begrenzung des Mauls (112) herum ausgebildet ist.

4. Haken für einen Abrollkipper nach einem der vorhergehenden Ansprüche, ferner umfassend eine zusätzliche Abnutzungsanzeige (124).

5. Haken für einen Abrollkipper nach einem der vorhergehenden Ansprüche, wobei die Abnutzungsanzeige (124) ein Abnutzungsanzeigeelement (124) umfasst, das bezüglich einer Außenfläche des Hakenabschnitts (104) erhaben ist.

6. Haken für einen Abrollkipper nach Anspruch 5, wobei die Abnutzungsanzeige (124) eine im Wesentlichen durchgehende Abnutzungsanzeigefläche (126) umfasst, die von der Außenfläche des Hakenabschnitts (104) versetzt ist, um das Abnutzungsanzeigeelement (124) zu bilden.

7. Haken für einen Abrollkipper nach Anspruch 6, wobei die Abnutzungsanzeigefläche (126) im Wesentlichen planar ist.

8. Haken für einen Abrollkipper nach Anspruch 6, wobei die Abnutzungsanzeigefläche (126) mit einem vorbestimmten Abstand von der Außenfläche des Hakenabschnitts (104) versetzt ist, so dass die Abnutzungsanzeigefläche (126) ein Konturprofil hat, das mit einem Konturprofil der Außenfläche des Hakenabschnitts (104) im Wesentlichen identisch ist.

9. Haken für einen Abrollkipper nach Anspruch 6 oder 7, wobei die Abnutzungsanzeigefläche (926) bezüglich der Außenfläche des Hakenabschnitts (904) geneigt ist, so dass das Abnutzungsanzeigeelement (924) eine abnehmende Tiefe entlang der Neigung hat.

10. Haken für einen Abrollkipper nach Anspruch 9, wobei die Abnutzungsanzeigefläche (926) über eine Breite der Abnutzungsanzeigefläche (926) geneigt ist, so dass die Tiefe des Abnutzungsanzeigeelements (924) über eine Breite des Abnutzungsanzeigeelements (924) variiert.

11. Haken für einen Abrollkipper nach einem der Ansprüche 1 - 4, wobei die Abnutzungsanzeige (1324) eine Abnutzungsanzeigeaussparung (1324) ist, die bezüglich einer Außenfläche des Hakenabschnitts (1304) im Wesentlichen ausgespart ist.

12. Haken für einen Abrollkipper nach einem der vorhergehenden Ansprüche, wobei das Maul einen Scheitel (118, 120) umfasst, der bezüglich des restlichen Mauls einen kleineren Krümmungsradius hat, und wobei die Abnutzungsanzeige in der Nähe des Scheitels (118, 120) des Mauls ausgebildet ist.

13. Haken für einen Abrollkipper nach einem der vorhergehenden Ansprüche, wobei der Schaftabschnitt dazu ausgestaltet ist, den Haken freigebbar mit einem Abrollkipper zu verbinden.

14. Haken für einen Abrollkipper nach einem der vorhergehenden Ansprüche, ferner umfassend eine Maulöffnung (116), um Zugang zum Maul bereitzustellen, und einen Schließriegel (117) zum gezielten Schließen der Maulöffnung.

15. Abrollkipper, umfassend einen Haken nach einem der vorhergehenden Ansprüche.

## Revendications

1. Crochet (100) pour un dispositif de chargement à crochet (10), comprenant :
une partie tige (102) pour raccorder le crochet (100) à un dispositif de chargement à crochet (10) ;
une partie crochet (104) comprenant une gorge (112) ;
**caractérisé par**
un indicateur d'usure (124) formé sur la partie crochet (104), configuré pour indiquer l'usure sur la partie crochet (104).

2. Crochet pour un dispositif de chargement à crochet selon la revendication 1, dans lequel l'indicateur d'usure (124) est formé autour d'au moins une partie d'une circonférence intérieure ou d'un périmètre intérieur de la gorge (112).

3. Crochet pour un dispositif de chargement à crochet selon la revendication 2, dans lequel l'indicateur d'usure (124) est formé autour sensiblement de la circonférence intérieure entière ou du périmètre intérieur entier de la gorge (112).

4. Crochet pour un dispositif de chargement à crochet selon une quelconque revendication précédente, comprenant en outre un indicateur d'usure supplémentaire (124).

5. Crochet pour un dispositif de chargement à crochet selon une quelconque revendication précédente, dans lequel l'indicateur d'usure (124) comprend un élément d'indicateur d'usure (124) qui est relevé par rapport à une surface extérieure de la partie crochet (104).

6. Crochet pour un dispositif de chargement à crochet selon la revendication 5, dans lequel l'indicateur d'usure (124) comprend une surface d'indicateur d'usure sensiblement continue (126) qui est décalée par rapport à la surface extérieure de la partie crochet (104) afin de former l'élément d'indicateur d'usure (124).

7. Crochet pour un dispositif de chargement à crochet selon la revendication 6, dans lequel la surface d'indicateur d'usure (126) est sensiblement plane.

8. Crochet pour un dispositif de chargement à crochet selon la revendication 6, dans lequel la surface d'indicateur d'usure (126) est décalée par rapport à la surface extérieure de la partie crochet (104) selon une distance prédéterminée de telle sorte que la surface d'indicateur d'usure (126) ait un profil de contour sensiblement identique à un profil de contour de la surface extérieure de la partie crochet (104).

9. Crochet pour un dispositif de chargement à crochet selon la revendication 6 ou 7, dans lequel la surface d'indicateur d'usure (926) est inclinée par rapport à la surface extérieure de la partie crochet (904) de telle sorte que l'élément d'indicateur d'usure (924) ait une profondeur décroissante le long de l'inclinaison.

10. Crochet pour un dispositif de chargement à crochet selon la revendication 9, dans lequel la surface d'indicateur d'usure (926) est inclinée sur une largeur de la surface d'indicateur d'usure (926) de telle sorte que la profondeur de l'élément d'indicateur d'usure (924) varie sur une largeur de l'élément d'indicateur d'usure (924).

11. Crochet pour un dispositif de chargement à crochet selon l'une quelconque des revendications 1 à 4, dans lequel l'indicateur d'usure (1324) est un évidement d'indicateur d'usure (1324) qui est sensiblement évidé par rapport à une surface extérieure de la partie crochet (1304).

12. Crochet pour un dispositif de chargement à crochet selon une quelconque revendication précédente, dans lequel la gorge comprend un sommet (118, 120) ayant un rayon de courbure plus petit par rapport au reste de la gorge, et dans lequel l'indicateur d'usure est formé à proximité du sommet (118, 120) de la gorge.

13. Crochet pour un dispositif de chargement à crochet selon une quelconque revendication précédente, dans lequel la partie tige est configurée pour raccorder, de façon libérable, le crochet à un dispositif de chargement à crochet.

14. Crochet pour un dispositif de chargement à crochet selon une quelconque revendication précédente, comprenant en outre une ouverture de gorge (116) pour permettre l'accès à la gorge, et un verrouillage de fermeture (117) pour fermer sélectivement l'ouverture de gorge.

15. Dispositif de chargement à crochet, comprenant un crochet selon l'une quelconque des revendications précédentes.
